# EUROPEAN PATENT APPLICATION

(11) **EP 1 729 439 A2**
(43) Date of publication of application: **06.12.2006**
(21) Application number: 06008215.3
(22) Date of filing: 20.04.2006
(51) Int. Cl.: H04L 1/24

(54) **Rapid data point selection for generating eye diagrams**

(30) Priority: 02.06.2005 US 144124
(71) Applicant: AGILENT TECHNOLOGIES, INC. (A Delaware Corporation), Palo Alto, CA 94306 (US)
(72) Inventor: Abramovitch, Daniel Y., Loveland, CO 80537-0599 (US)
(74) Representative: Zinkler, Franz

(57) **Abstract**

A method and apparatus for constructing an eye diagram. Occurrences of a value in a signal are counted [137, 145, 163] during a time interval and the count is plotted [141, 151, 169] to construct the eye diagram. Occurrences of additional values are counted [137] and selected counts [139] are plotted, or another value is selected [147] as a function of the occurrence count and during a subsequent time interval occurrences of the second value are counted [149] and plotted.

## Description

### Background

Elements of a high-speed communication system typically communicate with each other by sending serial bit streams of data. A serial bit stream of data is usually a series of binary pulses encoded to convey information. If the pulses in a stream of data are degraded during transmission, wrong information may result. It is therefore important that system designers and maintenance personnel be able to measure the quality of a communication system to ensure that it can accurately convey data from origin to destination.

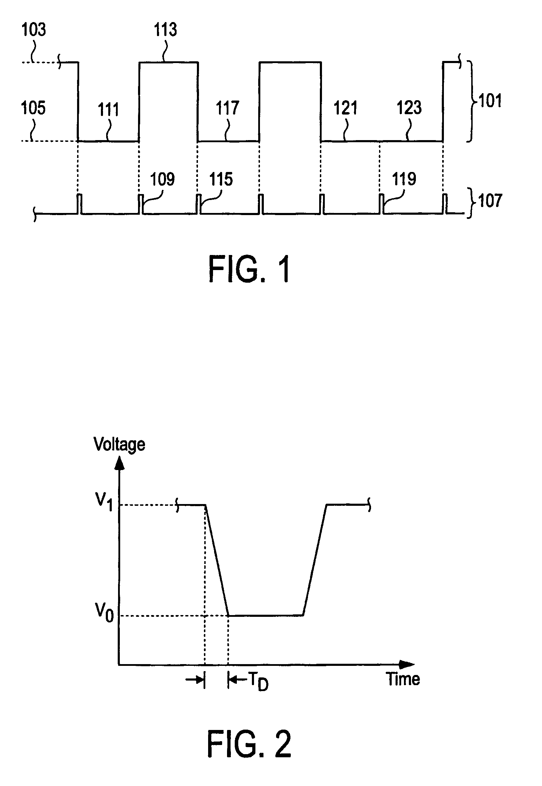

In an ideal binary signal the actual voltage levels of the bits will always correspond with either a logical "0" or a logical "1" as shown in Figure 1. A stream of binary pulses 101 transitions instantaneously between a "1" level 103 and a "0" level 105 on edges of trigger pulses in a clock signal 107. For example, the voltage level transitions instantaneously from "0" to "1" on the leading edge of a trigger pulse 109 because the bit 111 that precedes the trigger pulse 109 is a "0" bit whereas the bit 113 that follows the trigger pulse 109 is a "1" bit. Similarly, the voltage level transitions instantaneously from "1" to "0" on the leading edge of a trigger pulse 115 because the preceding bit 113 is a "1" bit whereas the following bit 117 is a "0" bit. However, there is no transition on the leading edge of a trigger pulse 119 because both the preceding bit 121 and the following bit 123 are "0" bits.

Real-life signals are never as good as the ideal. Fig. 2 shows an example of a pulse that has been degraded during transmission. Instead of transitioning instantaneously between "1" and "0" voltage levels (designated V₁ and V₀ respectively), the voltage level takes a fmite amount of time T_{D} to go from V₁ to V₀ and the voltage assumes many if not all intermediate voltage levels during the transition.

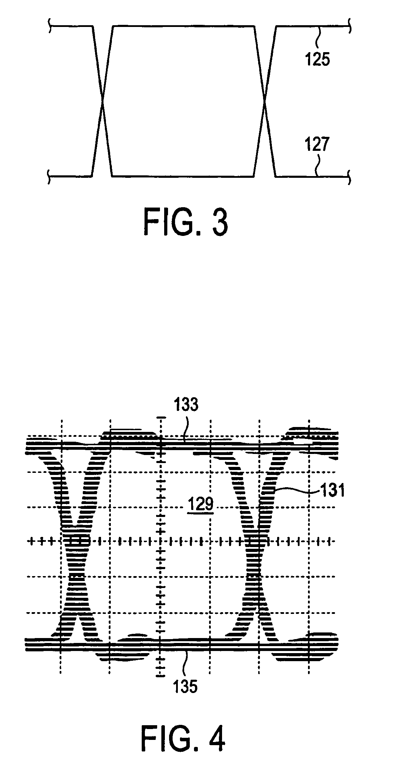

Degradation of a signal can be observed by means of a sampling oscilloscope. Such an instrument takes samples of the actual voltage levels of a received signal at various time offsets from the clock signal trigger. These samples are plotted with reference to an *x-y* coordinate system in which the vertical or *y*-axis represents a physical quantity such as voltage and the horizontal or *x*-axis represents time. This process is repeated many times, superimposing a display of one bit stream on the display of another, over and over as more bit streams arrive. Fig. 3 shows two such bit streams 125 and 127 superimposed, and Fig. 4 shows many such bit streams superimposed as they might appear on an actual sampling oscilloscope screen.

The type of display shown in Fig. 4 is known as an "eye" diagram. The closer the transitions between "0" and "1" levels are to the ideal, the more open space 129 there will be between transition areas. The more open space there is, the more the eye is said to be open. More specifically, the closer the transitions are to the ideal instantaneous switch between "0" and "1" levels, the smaller will be the spread of points around the transition regions 131. The lower the amplitude noise, the smaller will be the spread of points around the "1" level 133 and the "0" level 135. Thus the more unmarked space between measurement points (the more open the eye), the higher the signal quality.

As communication speeds increase, the bandwidth of the sampling oscilloscopes needed to create eye diagrams must increase proportionally. Also, a higher communication speed inevitably results in taking fewer samples from each bit stream. A signal of 40 GHz may be sampled at a rate of 40 KHz, resulting in a duty cycle of about 10⁻⁶. Sampling oscilloscopes sample an analog signal for a short duration, thereby assuring a high detection bandwidth, but they cannot take another sample quickly and therefore the acquisition rate is low.

In U.S. Patent Publication 2003/0097226 published May 22, 2003, Waschura et al. propose a system of counting occurrences of a signal within a first range of voltages during a fixed time interval, then counting occurrences within a second range of voltages, and so on until all voltage ranges have been covered, and then displaying the counts as data points to generate an eye diagram. Basically this system creates a grid of voltages and timing offsets that generates a count of samples for each time interval and voltage range. This system generates one pixel at a time. How much benefit this system offers when compared with a conventional sampling oscilloscope therefore becomes a function of how many pixels are desired in the display. If the display were 1000 x 1000 = 10⁶ pixels, the duty cycle of the Waschura system would be 10⁻⁶, which would not represent any improvement. A typical oscilloscope screen resolution is closer to about 400 x 300 = 1.2 x 10⁵ pixels, which represents a duty cycle of just under 10⁻⁵. This is an improvement of about one order of magnitude.

U.S. Patent 6,745,148, issued June 1, 2004 to the applicant herein and assigned to the same assignee as the present application, discloses a method of selecting data points for a bit error rate tester ("BERT"). This method avoids the need to generate and plot all data points and therefore increases the speed at which diagrams such as V-curves, bathtub curves, and BERT-type eye diagrams can be generated from bit error rate data.

As the data rates of communication systems continue to increase, there remains a need for a way to improve the speed and accuracy of generating eye diagrams.

### Summary of the Invention

In one aspect the invention resides in a method of constructing an eye diagram. Occurrences of each of a plurality of values of a signal during one time interval are counted, and some or all of the occurrence counts are plotted to construct the eye diagram. In some embodiments at least one count is selected as a function of at least one other count. The function may be an optimization function such as a maximization or minimization function. The function may be logarithmic. In some embodiments counting an occurrence of a value means measuring a parameter of the signal and counting an occurrence if that parameter is within a predetermined range.

In another aspect occurrences of a first value in a signal are counted during a first time interval. A second value is selected as a function of the count of occurrences of the first value. Occurrences of the second value are counted during a second time interval. The counts of occurrences of the first and second values are plotted to construct the eye diagram. Some embodiments also include selecting a next value as a function of the count of occurrences of a previous value and counting occurrences of the next value during a next defined time interval. In some embodiments, each time interval has the same duration as each other time interval. In some embodiments a duration may be selected for a next time interval as a function of at least one previous observation such as a count of occurrences of a previous value or the duration of a previous time interval.

In another aspect occurrences of each of a plurality of initial values in a signal are counted during an initial time interval. Next values are selected as a function of the counts of occurrences of the initial values, and occurrences of these next values are counted during a next time interval.

In another aspect the invention resides in apparatus for constructing an eye diagram. A first event counter counts occurrences of a first value in a signal during a defined time interval. A second event counter counts occurrences of a second value in the signal during the defmed time interval. A display receives the first and second counts and displays them in an eye diagram. The first value may be any voltage between two reference voltages. A comparator may provide a response to an event counter when the signal has a voltage between the reference voltages.

In another aspect of the invention, a first event counter counts occurrences of a selected value in a signal during a defined time interval. A selector selects another value as a function of the count of occurrences of a previous selected value. In some embodiments a second event counter counts occurrences of a second selected value provided by the selector during the defined time interval.

Other aspects and advantages of the invention will become apparent from the following detailed description, taken in conjunction with the accompanying drawings, illustrating by way of example the principles of the invention. Throughout, the singular includes the plural according to context.

### Brief Description of the Drawings

FIGURE 1 is a graph of an idealized bit stream of data.
FIG. 2 is a graph of a degraded pulse.
FIG. 3 is a graph of two degraded pulses superimposed on each other.
FIG. 4 is a graph of an eye diagram displayed on an oscilloscope screen.
FIG. 5 is a flowchart of an embodiment of the invention.
FIG. 6 is a flowchart of an embodiment of the invention.
FIG. 7 is a flowchart of an embodiment of the invention.
FIG. 8 is a block diagram of an embodiment of the invention.
FIG. 9 is a partial schematic diagram of an embodiment of the invention.
FIG. 10 is a block diagram of an embodiment of the invention.

### Detailed Description

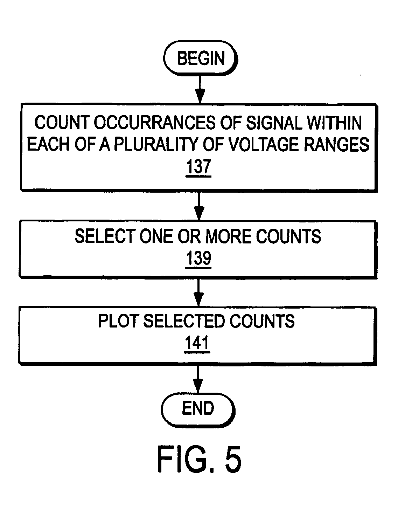

As shown in Fig. 5, in one embodiment the invention provides a method of constructing an eye diagram. The method includes (137) counting occurrences of each of a plurality of values of a signal during one defined time interval, (139) selecting a plurality of the occurrence counts, and (141) plotting the selected counts to construct the eye diagram. In some embodiments selecting a plurality of the counts means selecting all of them. In some embodiments selecting a plurality of the counts means selecting at least one count as a function of at least one other count, which necessarily means discarding some of the counts.

The function that is used to select a count may be an optimization function. The optimization function may be a maximization function that maximizes, for example, a difference between values, or it may be a minimization function that, for example, avoids selection of a count that is minimal when compared with other counts. It may be a logarithmic function.

A value may specify a parameter of the signal. For example, a value might specify a range of voltages, and any measurement of signal voltage within that range of voltages is counted as an occurrence of the value.

This method of counting occurrences of each of a plurality of values during the same time interval results in construction of an eye diagram of the kind depicted in Fig. 4 very rapidly. For example, if ten values are measured simultaneously and counts of the occurrences of all ten are selected and plotted, construction of an eye diagram for any given total number of measurements can be accomplished an order of magnitude faster than with methods such as the previously-known ones described previously. Using a function to select various ones of the counts for measuring and plotting, such that only the most interesting ones are measured, speeds up the process even more.

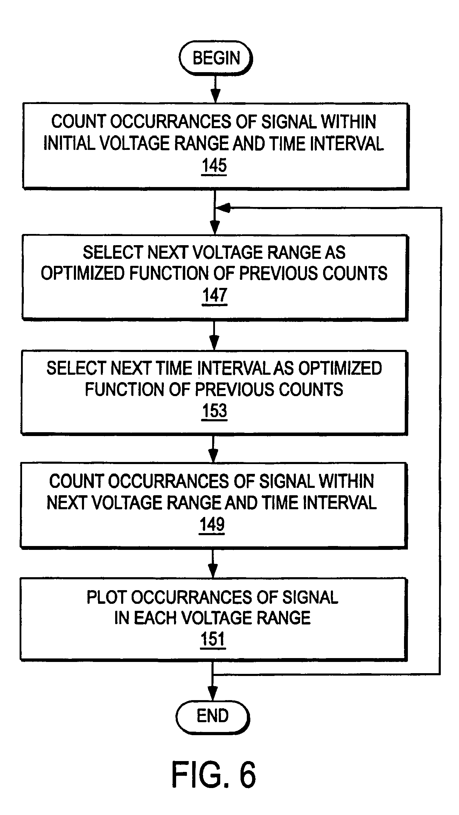

Another embodiment as shown in Fig. 6 provides a method of constructing an eye diagram. The method includes (145) counting occurrences of a first value in a signal during a first time interval, (147) selecting a second value as a function of the count of occurrences of the first value, (149) counting occurrences of the second value in the signal during a second time interval, and (151) plotting the counts of the occurrences of the first and second values to construct the eye diagram.

The method may also include (147) selecting a next value as a function of the count of occurrences of at least one previous value, (149) counting occurrences of the next value in the signal during a next time interval, and (151) plotting the count of occurrences of the next value to further construct the eye diagram.

All the time intervals may have the same duration. Or the duration of any time interval after the first one may be (153) selected as a function of at least one of the counts of occurrences of a previous value in the signal. For example, if occurrences of a certain value are counted many times during one time interval, it may be possible to shorten the time interval for a nearby value and still count enough events to obtain an accurate diagram. In this way it becomes possible to obtain useful counts of occurrences that happen at a high rate in significantly less time than the time needed to obtain a useful count of occurrences that happen relatively infrequently. For example, selecting a reduced number of ranges of parameter values that have high event counts may speed up the process.

Another technique is to specify a period of time (such as ten minutes or one hour) during which all measurements to construct the diagram will be made. By selecting shorter intervals during which the more frequently occurring values are counted, more useful measurements can be obtained within the specified time than would otherwise be the case. This improves the quality of the diagram that can be constructed from measurements taken during the specified period of time.

Conversely, if occurrences of a certain value are counted very seldom, it may be desirable to lengthen the time interval for a nearby value in order to count enough events to obtain an accurate diagram.

The foregoing method results in construction of an eye diagram of the kind depicted in Fig. 4 in an iterative manner. As a result of each iteration, at least one additional value is specified as a function of previously provided counts. In other words, a function of previous counts is used to select the value of which occurrences are counted in any given iteration. In this manner a more accurate eye diagram count can be obtained more quickly than can be obtained by using methods such as the previously-known ones described previously.

Selection of the values of which the number of occurrences is to be counted can be based on one or more functions. For example, this selection can be based solely on previous values. If a range of values of a parameter such as voltage is being measured, a new voltage range can be selected that differs significantly from a previous one. Voltage ranges can also be selected as a function of the values of previous event counts. For example, voltage ranges may be selected such that both the voltage range and the count differ as much as possible from those values at the previously provided measurement points.

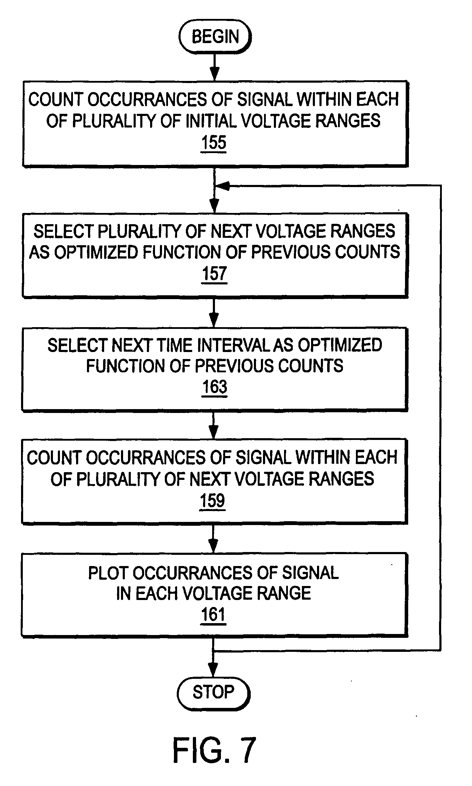

Another embodiment as shown in Fig. 7 provides a method of constructing an eye diagram. The method includes (155) counting occurrences of each of a plurality of initial values in a signal during an initial time interval, (157) selecting a plurality of next values as a function of the counts of occurrences of the initial values, (159) counting occurrences of the next values in the signal during a next time interval, and (161) plotting the counts to construct the eye diagram.

As in the previous embodiment, all the time intervals may have the same duration or the duration of any time interval after the initial one may be (163) selected as a function of at least one of the counts of occurrences of a previous value in the signal.

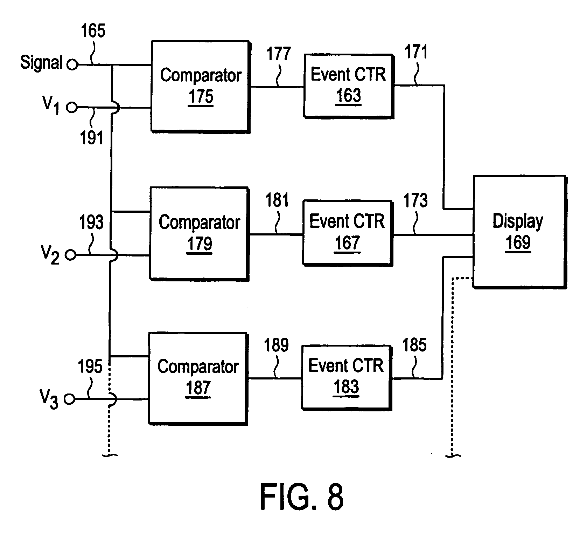

An embodiment of apparatus for constructing an eye diagram is shown in Fig. 8. A first event counter 163 counts occurrences of a first value in a signal carried by a signal input line 165 during a defined time interval. A second event counter 167 counts occurrences of a second value in the signal during the defined time interval. A display 169 receives the first and second occurrence counts on output lines 171 and 173, respectively, and displays them in an eye diagram.

In some embodiments a first comparator 175 provides a response to the first event counter 163 over a response line 177 indicating occurrence of the first value in the signal. Similarly, a second comparator 179 provides a response to the second event counter 167 over a response line 181 indicating occurrence of the second value in the signal.

In some embodiments a third event counter 183 counts each occurrence of a third value in the signal during the defmed time interval and provides the count to the display through an output line 185. A third comparator 187 provides a response to the third event counter 183 over a response line 189 indicating occurrence of the second value in the signal. Dashed lines indicate that additional event counters and comparators may be used if it is desired to count occurrences of additional values in the signal during the same time interval.

The first, second and third values may be provided by an external source (not shown) to the first, second and third comparators through input lines 191, 193 and 195, respectively.

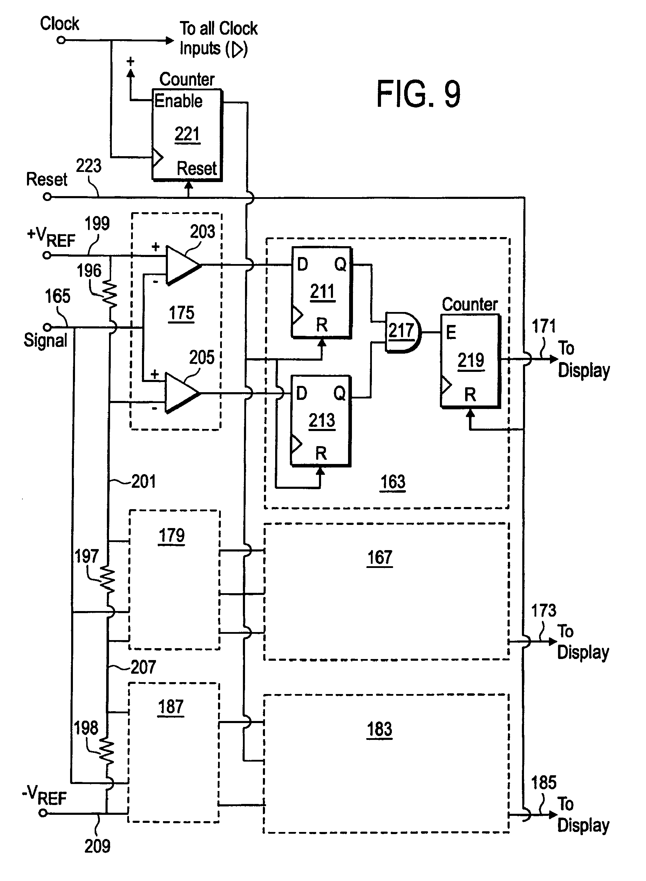

As shown in Fig. 9, in some embodiments a reference voltage source provides a relatively high reference voltage and a relatively low reference voltage to the first comparator 175 on voltage lines 199 and 201 respectively. These two voltages defme the first value as any voltage between the reference voltages. In the embodiment shown, the reference voltage source is a simple resistive voltage divider consisting of resistors 196, 197 and 198 connected in series and powered by an external D.C. power supply (not shown). A variable source, a source having a plurality of variable outputs, a plurality of separate fixed or variable voltage sources, or the like might be used instead.

In the embodiment shown in Fig. 9, the first comparator 175 includes two operational amplifiers 203 and 205. A positive input of the amplifier 203 receives the higher reference voltage on the line 199. A negative input of the amplifier 205 receives the lower of the two reference voltages on the line 201. The other inputs of both amplifiers receive the input signal. Whenever the signal voltage is less than the higher reference, the amplifier 203 provides a logical "1" output, and whenever the signal voltage is greater than the lower reference, the amplifier 205 provides a logical "1" output. When the signal is between these two values, both amplifiers provide a logical "1" output.

The second and third comparators 179 and 187 and their associated circuitry are similar. The reference voltage source provides a reference voltage to comparator 179 on the line 201. This voltage is the same as the lower of the two reference voltages that define the first value. The reference voltage source also provides a still lower voltage on a line 207. The second value is defined as any voltage between the two reference voltages provided on the lines 201 and 207 to the second comparator. When the signal is between these two reference voltages, both amplifiers (not shown) in the second comparator provide a logical "1" output. In similar manner, the amplifiers in the third comparator 187 provide a logical "1" output when the signal is between two reference voltages carried by the line 207 and a line 209 that defme the third value.

The first event counter 163 has two D-type flip-flops 211 and 213 to latch the outputs of the first comparator 175. The flip-flops are triggered by an external clock source (not shown) that drives all clock inputs in the apparatus. Each time a clock pulse occurs, the flip-flops latch the outputs then being provided by the comparator. The flip-flops are coupled to an AND gate 217 that provides a logical "1" output only when both flip-flops provide a logical "1" to it. In other words, the AND gate gives a logical "1" output each time the signal has the first value.

The first event counter 163 has a counter 219 that increments on each clock pulse if a logical "1" is then being provided by the AND gate 217 to the enable input of the counter 219. Thus, the counter 219 counts the number of occasions during the defined time interval when the response latched by the flip-flops indicates the signal has the first value - that is, a voltage between the reference voltages being provided to the first comparator.

Another counter 221 counts all the clock pulses. When this counter reaches a count indicating that a desired timing interval has occurred, it resets all the flip-flops thereby stopping any event counters from incrementing any more. When it is desired to make another count of the occurrences of values of the signal, a reset pulse is applied to the counters through a reset line 223.

The second and third event counters 167 and 183 and their associated circuitry are similar.

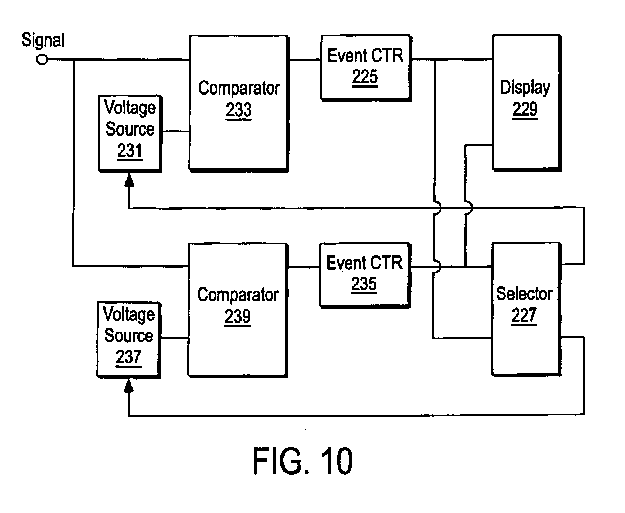

Another embodiment of apparatus for constructing an eye diagram is shown in Fig. 10. A first event counter 225 counts occurrences of a selected value in a signal during a defined time interval. A selector 227 selects another value as a function of the count of occurrences of a previous selected value. A display 229 displays counts of occurrences of a plurality of values in an eye diagram.

In some embodiments a voltage source 231 a selected value provided by the selector 229 and provides a plurality of voltages defining a voltage range corresponding with the selected value. A comparator 233 responds to the signal and to the plurality of voltages to communicate to the event counter 225 an occurrence of the selected value in the signal if the signal has a voltage within the defined voltage range

In some embodiments a second event counter 235 counts occurrences of another selected value in the signal during the defined time interval. This occurrence count is provided to the display 229 to be displayed in the eye diagram. A second voltage source 237 responds to a second selected value provided by the selector 227 to provide a second plurality of voltages defining a second voltage range. A second comparator 239 is responsive to the signal and to the second plurality of voltages to communicate to the second event counter 235 an occurrence of the second selected value in the signal if the signal has a voltage within the defined second voltage range. This apparatus may be used to simultaneously count occurrences of two different values in the signal during a defined time interval and based on those counts to select two additional values and count occurrences of those additional values. In this way the time required to generate an eye diagram is greatly reduced, both by simultaneous counting of two or more signal values and by selecting interesting additional values to count.

The invention may be practiced otherwise than as described in the foregoing paragraphs and is not to be limited by anything therein. The invention is limited only by the following claims.

## Claims

1. A method of constructing an eye diagram comprising:
counting [137, 145] occurrences of an initial value of a signal during a first time interval; and
plotting [141, 151] the count of the occurrences to construct the eye diagram.

2. A method as in claim 1 and further comprising:
counting [137] occurrences of a plurality of additional values of the signal during the first time interval;
selecting [139] a plurality of the occurrence counts; and
plotting [141] the selected occurrence counts to further construct the eye diagram.

3. A method as in claim 2 wherein selecting a plurality of the counts comprises selecting at least one count as a function of at least one other count.

4. A method as in claim 1 and further comprising:
selecting [147] a second value as a function of the count of occurrences of the initial value;
counting [149] occurrences of the second value in the signal during a second time interval; and
plotting [151] the count of the occurrences of the second value to further construct the eye diagram.

5. A method as in claim 1 and further comprising:
counting [155] occurrences of each of a plurality of additional initial values of the signal during the first time interval;
selecting [157] a plurality of next values as a function of the counts of occurrences of the initial values;
counting [159] occurrences of each of the plurality of next values of the signal during a second time interval; and
plotting [161] the counts to further construct the eye diagram.

6. A method as in claim 4 or 5 and further comprising selecting [153, 163] a duration for a time interval as a function of a count of occurrences of a value during a previous time interval.

7. A method as in any of claims 3-6 wherein the function comprises an optimization function.

8. A method as in claim 7 wherein the optimization function is selected from the group comprising: a logarithmic function; a maximization function that maximizes a difference between values; and a minimization function that avoids selection of one of a count that is relatively low when compared with other counts and a value corresponding with a count that is relatively low when compared with other counts.

9. Apparatus for constructing an eye diagram that depicts a characteristic of a signal comprising:
a first event counter [163, 225] that counts occurrences of a first value in a signal during a defined time interval;
a second event counter [165] that counts occurrences of a second value in the signal during the defined time interval; and
a display [169, 229] that receives the first and second occurrence counts and displays them in an eye diagram.

10. Apparatus as in claim 9 and further comprising a selector [227] that selects an additional value as a function of the count of occurrences of a previous value, the first event counter [225] operative to count occurrences of the selected additional value during a subsequent defined time interval, the display [229] being operative to display the count of the occurrences of the selected additional value in the eye diagram.
